(19) **Europäisches Patentamt / European Patent Office / Office européen des brevets**

(11) **EP 1 604 960 B1**

(12) **EUROPEAN PATENT SPECIFICATION**

(45) Date of publication and mention
of the grant of the patent:
**13.07.2011 Bulletin 2011/28**

(51) Int Cl.:
***C03C 17/25*** (2006.01)

(21) Application number: **03712841.0**

(86) International application number:
**PCT/JP2003/003503**

(22) Date of filing: **24.03.2003**

(87) International publication number:
**WO 2004/085330 (07.10.2004 Gazette 2004/41)**

(54) **METHOD FOR PRODUCING GLASS SHEET COATED WITH TITANIUM OXIDE THIN FILM**

HERSTELLUNGSVERFAHREN FÜR EINE MIT EINEM TITANOXIDDÜNNFILM BESCHICHTETE GLASSCHEIBE

PROCEDE DE PRODUCTION DE FEUILLE DE VERRE REVETUE D'UN FILM FIN D'OXYDE DE TITANE

(84) Designated Contracting States:
**AT BE BG CH CY CZ DE DK EE ES FI FR GB GR HU IE IT LI LU MC NL PT RO SE SI SK TR**

(43) Date of publication of application:
**14.12.2005 Bulletin 2005/50**

(73) Proprietor: **Nakajima Glass Co., Inc.**
**Ibara-shi, Okayama 715-0004 (JP)**

(72) Inventors:
• **NAKAJIMA, Takeshi**
**Hiroshima 720-0061 (JP)**
• **YUUKI, Takeshi**
**Fukuyama-shi, Hiroshima 720-0083 (JP)**
• **AKIYAMA, Masaru**
**Kibi-gun, Okayama 710-1312 (JP)**

• **MASADA, Keizo**
**Kurashiki-shi, Okayama 710-0251 (JP)**

(74) Representative: **Müller-Boré & Partner**
**Patentanwälte**
**Grafinger Straße 2**
**81671 München (DE)**

(56) References cited:
EP-A- 0 486 393          WO-A-01/17922
JP-A- 4 150 973          JP-A- 8 112 565
JP-A- 8 292 301          JP-A- 10 005 681
JP-A- 2000 192 021       JP-A- 2001 180 979
JP-A- 2001 180 980       JP-A- 2001 328 846
JP-A- 2002 201 044       US-A- 4 323 598
US-A1- 2002 114 945

**Description**

The present invention relates to a method for producing a glass sheet coated with a titanium oxide thin film. In particular, the invention relates to a method for producing a glass sheet coated with a titanium oxide thin film, which comprises forming a titanium oxide thin film having a photocatalyst function such as fogging resistance and contamination resistance, on a glass substrate under a specific coating condition or heating condition.

Forming a titanium oxide thin film on the surface of a glass substrate makes the coated glass sheet have fogging resistance, which is described in, for example, Japanese Patent No. 2756474 (WO96/29375). This is based on the fact that irradiation of a photocatalyst semiconductor, titanium oxide crystals with light having a wavelength of higher energy than the band gap energy of the semiconductor hydrophilicates the surface of the semiconductor to a high degree. It is said that coating the surface of glass with a titanium oxide thin film is broadly applicable to use for windowpanes, windshields and mirrors of which the reduction in the visibility owing to fogging is disliked.

Japanese Patent No. 2756474 describes a method of forming a thin film of titanium oxide crystals by applying a solution that contains an organic or inorganic titanium compound or a sol that contains titanium oxide particles to a glass substrate followed by baking it at a high temperature. Regarding the method of coating a glass sheet, it describes examples of flow coating or spraying.

Japanese Patent No. 2756474 says that titanium oxide to be hydrophilicated through irradiation with light may be either anatase-form crystals or rutile-form crystals, further saying that this differs from the point that photodecomposition of chemical substances is recognized only in anatase-form ones. It says that, when amorphous titania (titanium oxide) is calcined at 400 to 500°C or higher, then anatase-form titania is obtained; but at 600 to 700°C or higher, then rutile-form titania is obtained. Concretely, Example 11 describes formation of anatase-form crystals through calcination at 650°C and formation of rutile-form crystals through calcination at 800°C.

JP-A 7-100378 describes a method of obtaining an anatase-form titanium oxide thin film, which comprises coating a substrate with a titania sol and gradually heating it from room temperature up to a final temperature of from 600°C to 700°C. It says that, if the final temperature is too high or if the heating speed is too high, then the product may contain rutile-form crystal of poor photodecomposition ability. Concretely, it says that, when the coated substrate is gradually heated up to 750°C or when it is rapidly heated up to 650°C, then the product contains a considerably large amount of rutile-form crystals.

On the other hand, in Example 29 of Japanese Patent No. 2756474, the surface of a glazed tile is coated with a mixture of anatase-form titania sol and colloidal silica, and baked at 800°C. It says that admixing titania with silica improves the abrasion resistance of the coated product, saying that the pencil hardness of a film of titania alone is 6B.

Japanese Patent No. 2756474 says that, when an alkali metal ion-containing glass substrate is coated with titanium oxide, then an interlayer of silica or the like is previously formed between the substrate and the titania layer and the coated substrate is baked. This prevents the alkali metal ions in the glass substrate from diffusing into the titanium oxide coating during baking. Concretely, Example 7 says as follows: In a case where the surface of soda lime glass is directly coated with amorphous titania and baked at 500°C, the contact angle with water of the coated glass is larger and less hydrophilicated than that in a different case in which an interlayer is provided.

JP-A 2001-180980 (EP 1081108A1) describes curved glass and tempered glass coated with a photocatalytic hydrophilic film for which the film-forming composition comprising zirconium oxide and silicon oxide contains titanium oxide crystals dispersed therein. Concretely, a liquid containing raw materials of the oxides is applied to a glass substrate and then baked at a temperature of from 560 to 700°C and the glass substrate is bent or tempered at the same time as the baking. This says that, when a titanium oxide crystal film is formed with no alkali barrier layer comprising silicon oxide and when it is bent and baked at a high temperature of from 560 to 700°C, then the alkali component of glass moves into the photocatalytic thin film and therefore the photocatalytic function of the film significantly lowers, further saying that, to solve the problem, titanium oxide crystals are dispersed in the film-forming component that contains not only silicon oxide but also zirconium oxide.

However, in such a case where a titanium element-containing liquid is applied to the surface of a glass substrate and then heated to form a titanium oxide thin film on the substrate, it is not always easy to form a coating film with neither thickness unevenness nor defects. Since titanium oxide has a higher refractive index than glass, it often causes interference color when a titanium oxide thin film is formed on the surface of a glass substrate. In this case, the presence of coating film thickness unevenness and defects is readily visible owing to the change in the interference color and the occurrence of interference fringes, and any minor thickness unevenness and defects would be a problem of the appearance of the coated article. When the area to be coated is large, then uniform coating may be more difficult and it often causes a problem of low product yield.

The invention has been made for solving these problems, and provides a method for producing a glass sheet coated with a titanium oxide thin film of good transparency with neither interference color nor interference fringes, which comprises applying a titanium element-containing liquid onto the surface of a glass substrate.

When the practicability of a glass sheet coated with a photocatalytic titanium oxide thin film is taken into consideration, its durability is extremely important. In particular, in outdoor applications where the photocatalytic function of the coated glass sheet is expressed by sunlight, the sheet needs to be simply but periodically cleaned in many cases even though the titanium oxide thin film thereon has contamination resistance. In the case, it is important that the coating film has good resistance to friction. The pencil hardness of the coating film formed by baking a titania sol alone is 6B, as in Japanese Patent No. 2756474, but it is a quite unsatisfactory level when the practicable abrasion resistance of the coated article is taken into consideration. Solving the problem is also an object of the invention.

On the other hand, regarding the morphology thereof, titanium oxide for use as a photocatalyst preferably has an anatase-form crystal morphology, as so mentioned hereinabove. However, depending on the temperature condition in baking, amorphous or rutile-form crystal titanium oxide may be formed, and it is not always easy to define the condition for forming a thin film of anatase-form titanium oxide.

Further, also as so mentioned hereinabove, when a coating film of titanium oxide is directly formed on an alkali metal-containing glass substrate and then baked, then the alkali metal ions contained in the glass substrate inevitably move and diffuse into the titanium oxide thin film, thereby detracting from the photocatalytic properties of titanium oxide. However, if the photocatalyst, titanium oxide crystal is dispersed in a matrix of any other component, then it may reduce the catalytic effect of titanium oxide. When an interlayer of silica or the like is formed between a titanium oxide thin film and a glass substrate, then the film-forming operation may be complicated and the producibility may lower, and, in addition, another problem is that the product yield may lower.

The invention has been made for solving these problems, and its object is to provide a method for producing a glass sheet coated with a titanium oxide thin film, which comprises applying a titanium element-containing liquid onto the surface of a glass substrate having a surface compressive stress of lower than a predetermined value or below, then heating the surface coated with the liquid up to a predetermined maximum temperature near to the glass softening point and cooling it at a specific cooling speed related to the thickness of the glass sheet to thereby make the glass substrate have a predetermined surface compressive stress.

In general, a titanium oxide coated glass sheet can be attained by a method for producing a glass sheet coated with a titanium oxide thin film, which comprises adhering mist of titanium element-containing liquid droplets to the surface of a glass substrate so as to coat the surface of the glass substrate with the liquid, thereby forming thereon a titanium oxide thin film having a micro-roughness on the surface of the thin film. Since a micro-roughness is formed on the surface thereof, a thin film of good transparency can be produced and it is prevented from having interference color. In this case, it is desirable that the liquid is applied to the substrate and then once dried, and thereafter the coating operation is repeated. If the liquid is uniformly entirely applied onto the substrate while still wet, then the coated glass sheet may have interference fringes.

Preferably, an air spray gun is used in coating with the liquid, the air pressure applied to the air spray gun is from 0.13 to 0.8 MPa, and the jet mist amount out of the nozzle of the gun per unit time is from 1 to 10 ml/min. When a small amount of the liquid is sprayed on the substrate under a low pressure, then air bubbles are not taken into the coating film and a coating film having a uniform thickness is easy to form.

Preferably, plural air spray guns are used at the same time in coating with the liquid, and the coating is so controlled that the mist from each air spray gun does not overlap with each other. Using plural air spray guns improves the producibility and prevents the particle size of the mist particles from enlarging.

When air spray guns are used for the coating, the distance between the nozzle tip and the surface of the glass substrate is preferably kept from 10 to 50 cm for uniform coating with no waste. Also preferably, the glass substrate is previously heated before coated with the liquid as the coating liquid may be rapidly dried. Also preferably, the coating is carried out while the glass substrate is moved and the air spray gun is scanned in the direction crossing the moving direction for uniform coating in a simplified manner.

Apart from the method of using an air spray gun, it is also desirable that an ultrasonic spray is used in coating with the liquid, and the liquid temperature in the liquid tank of the ultrasonic spray is set higher by from 5 to 90°C than the surface temperature of the glass substrate. Thus keeping the surface temperature of the glass substrate lower than the temperature of the liquid drops enables thin and uniform coating with extremely fine liquid drops.

It is preferable that the surface of the glass substrate is heated to form a titanium oxide thin film thereon after it has been coated with the liquid. The heat treatment strengthens the titanium oxide thin film. In this case, it is desirable that the surface coated with the liquid is heated up to a maximum temperature of from 550 to 700°C, and then cooled under the condition satisfying the following formula (1):

$$0.2 \leq a/t^2 \leq 5 \qquad\qquad (1)$$

wherein a represents the time (second) taken in cooling the surface from 500°C to 200°C, t represents the thickness of the glass substrate (mm).

The object of the invention can be attained by providing a method for producing a glass sheet coated with a titanium oxide thin film, which comprises applying by spraying a titanium element-containing liquid having a content of metal elements and semi-metal elements except titanium element to that of titanium element of at most 1/10 by weight to the surface of a glass substrate having a surface compressive stress of at most 10 MPa, then heating the liquid-coated surface up to a maximum temperature of from 550 to 700°C, and cooling it under the condition satisfying the following formula (1) to thereby make the glass substrate have a surface compressive stress of from 20 to 250 MPa:

$$0.2 \leq a/t^2 \leq 5 \qquad\qquad (1)$$

wherein a represents the time (second) taken in cooling the surface from 500°C to 200°C, t represents the thickness of the glass substrate (mm). The production method under the condition makes it possible to form a tough titanium oxide thin film with good abrasion resistance on the surface of the glass substrate.

In this case, the time for which the temperature of the surface coated with the liquid falls within a temperature range of from 550 to 700°C is preferably from 20 to 500 seconds. The time not shorter than 20 seconds makes it possible to form a tough film. When an alkali metal-containing glass substrate is used, then the time not longer than 500 seconds makes it possible to prevent the alkali metal ions from diffusing into the titanium oxide thin film.

Also preferably, the surface is heated under the condition satisfying the following formula (2):

$$5 \leq b/t \leq 30 \qquad\qquad (2)$$

wherein b represents the time (second) taken in heating the surface from 200°C to 500°C, t represents the thickness of the glass substrate (mm). Heating under the condition prevents the glass substrate from being broken or damaged and prevents the alkali metal ions from diffusing.

In this case, the glass substrate preferably contains from 5 to 15 % by weight of an alkali metal. Glass of the type is desirable as its surface compressive stress is easy to increase through the heat treatment.

When the area of the glass substrate for use in the invention is at least 0.5 m$^2$, then the invention produces a great practical benefit. Also preferably, after the surface of the glass substrate is washed with an acidic aqueous solution and a surfactant-containing aqueous solution, it is coated with a titanium element-containing liquid. The embodiment enables to suitably wash away the contaminant having adhered to the glass substrate during transportation, to prevent coating unevenness and defects and to improve the adhesiveness of the titanium oxide thin film.

Preferably, the titanium element content of the titanium element-containing liquid used in this invention is from 0.1 to 10 % by weight as it enables to prevent the surface of the thin film from having a great roughness to worsen the transparency of the film. Also preferably, the liquid is a sol that contains titanium oxide particles as it is effective for forming a micro-roughness on the surface of the thin film. In particular, it is desirable that the sol contains anatase-form titanium oxide particles as it may form a tough thin film of anatase-form titanium oxide crystals within a short period of baking time.

When the titanium oxide thin film formed in the invention has a mean thickness of from 0.02 to 1 $\mu$m, then in general, it may readily have interference color and therefore the meaning of carrying out the invention is great in such a case. Preferably, the titanium oxide thin film comprises anatase-type titanium oxide as its photocatalytic activity is high. Also preferably, the ten-point mean roughness Rz, as defined by JIS B, of the surface of the titanium oxide thin film to be formed is from 5 to 50 nm. In this case, a thin film of good transparency is easy to form with retarding the occurrence of interference color. Also preferably, the glass sheet has a haze value of at most 5 %.

The invention is described in detail hereinunder.

In the invention, a titanium element-containing liquid is first applied by spraying onto the surface of a glass substrate. Not specifically defined, the titanium element-containing liquid may be any one capable of forming a titanium oxide thin film after heat treatment. For example, a solution of an organic titanium compound or an inorganic titanium compound may be used, or a sol containing titanium oxide particles may be used.

The organic titanium compound for the solution includes alkoxides such as tetraethoxytitanium, tetraisopropoxytitanium, tetra-n-propoxytitanium, tetrabutoxytitanium, tetramethoxytitanium; carboxylates and chelate compounds. Titanium chloride, titanium sulfate, peroxotitanic acid and other inorganic titanium compounds may also be used. The solution may be used for the coating therewith, either directly or after hydrolyzed.

Preferably, a sol containing titanium oxide particles is applied onto a glass substrate. The titanium oxide particles in the sol may be amorphous or anatase-form or rutile-form crystal particles. Above all, it is preferable that the sol contains anatase-form titanium oxide particles, as a tough thin film of titanium oxide crystals may be formed even within a short period of baking time and, even when an alkali metal-containing glass substrate is used, the alkali metal is prevented from diffusing into the titanium oxide thin film. In addition, since the sol of the type originally contain solid particles, it is effective for forming a micro-roughness on the surface of the thin film.

Not specifically defined, the mean particle size of the titanium oxide sol of the type is generally at most 100 nm, but preferably at most 30 nm for obtaining a homogeneous film with little whitening. Also not specifically defined, the main ingredient of the medium for the sol is preferably water from the viewpoint of the safety in the working environment for the coating operation.

Preferably, the titanium element content of the liquid to be applied to the glass substrate is at most 10 % by weight. If the concentration is larger than this, then the depth of the surface roughness may be too great and the transparency of the thin film may lower and, as a result, a uniform film may be difficult to form. Preferably, the concentration is at most 5 % by weight, more preferably at most 3 % by weight, most preferably at most 1 % by weight. When a liquid having a low concentration is used, then the thickness of the titanium oxide thin film to be formed in one coating operation may be small, but it may be readily uniform and the roughness formed on its surface may be fine. In consideration of the producibility, the titanium element content is generally at least 0.1 % by weight.

Preferably, the pH of the titanium element-containing liquid is at least 3. Using a neutral or alkaline liquid is desirable, because, when an alkali metal-containing glass substrate is used, the alkali metal ions may be prevented from diffusing into the titanium oxide thin film. Preferably, the pH is at least 5. Also preferably, the pH is at most 14.

Not detracting from the effect of the invention, the liquid to be applied to the glass substrate may contain any other metal elements and semi-metal elements such as silicon, except titanium element. However, for effective expression of the photocatalytic function of the liquid, the content of metal elements and semi-metal elements except titanium element in the liquid is preferably small. Concretely, the content of the additional elements to that of titanium element in the liquid is at most 1/10 by weight, but preferably, the liquid contains substantially no such additional elements.

One preferred embodiment of the titanium element-containing liquid for use in the invention is a liquid that contains anatase-form titanium oxide sol and peroxytitanic acid. The liquid is neutral, in which, however, titanium oxide particles are well dispersed in water, and this is preferably for carrying out the invention.

The glass substrate that is used as the starting material in the invention has a surface compressive stress of at most 10 MPa. The value is measured according to JIS R3222. When the glass substrate having such a low surface compressive stress is first heated up to a temperature around its softening temperature and then cooled under a predetermined condition, then the resulting glass sheet may have an increased surface compressive stress. With that, a titanium oxide thin film of good adhesiveness to the glass substrate may be formed, as so mentioned hereinunder.

The material of the glass substrate is not specifically defined. Preferably, the glass substrate contains from 5 to 15 % by weight of an alkali metal. The alkali metal therein lowers the softening point of glass. Containing an alkali metal within the range, the softening point of the glass substrate may lower to around the maximum temperature in the heat treatment. Accordingly, the modulus of elasticity of the glass substrate may lower at around the temperature at which anatase-form titania crystal may grow, and the glass substrate after the heat treatment under the condition of the invention may have a suitable surface compressive stress. As a result, a titanium oxide thin film of good abrasion resistance may be formed on the substrate. For the glass substrate of the type, most suitable is soda lime glass as its industrial importance is great and its necessity for tempering treatment is also great.

The size of the glass substrate is not specifically defined, but the thickness thereof is generally from 2.5 to 25 mm or so. The area of the glass substrate is generally at least 0.01 $m^2$, but preferably at least 0.5 $m^2$, more preferably at least 1 $m^2$. Coating unevenness is problematic especially when a broad area is coated, and the coating method of the invention is favorable for the case. Large-area articles are often used in many applications where the strength of glass is required.

Before being coated with a titanium element-containing liquid, the surface of the glass substrate is preferably washed for preventing coating unevenness and defects and for improving the adhesiveness of the titanium oxide thin film to the substrate. Surfactant alone may be used for the washing, but both an acidic aqueous solution and a surfactant-containing aqueous solution are preferably used. The substrate may be first washed with an acid-containing aqueous solution, for example, with aqueous acetic acid, and then with surfactant-containing water, and finally well with water, whereby contaminants having adhered to glass during transportation may be suitably washed away.

The method of applying a titanium element-containing liquid to the surface of a glass substrate is specifically defined to comprise spraying.

In general, spraying is employed as a mode of adhering mist of titanium element-containing liquid droplets to the surface of a glass substrate so as to coat the surface of the glass substrate with the liquid. The method makes it possible to form a micro-roughness on the surface of the titanium oxide thin film, and the film thus formed has no visible interference color. In particular, this point is important since titanium oxide crystals have a high refractive index of at least about 2.5 therefore often causing a problem of interference color in the appearance of the coating film containing them. In addition, even a minor degree of thickness unevenness may be readily visible as interference color change and interference fringes, and the above-mentioned method is favorable for obtaining a titanium oxide thin film with inconspicuous appearance unevenness. The method is especially effective when a large-area substrate that may readily produce a problem of coating thickness unevenness is coated uniformly.

In this case, it is desirable that the liquid is applied onto the substrate and then once dried thereon, and the coating operation is repeated. If the liquid is uniformly entirely applied onto the substrate while still wet, then the coating film may have an optically smooth surface in many cases and the coated glass sheet may have interference fringes. After an optically-inhomogeneous coating film has been once formed and dried and then the coating operation is repeated, whereby the substrate may be entirely surely coated with a titanium oxide thin film and the film thus formed can be an optically-inhomogeneous film. As a result, a titanium oxide thin film with no visible interference fringes may be obtained, still having a good photocatalytic effect and good adhesiveness to the substrate.

Concretely, an air spray gun or an ultrasonic spray is preferably used for the coating. Using the device for the coating, for example, a titanium oxide sol may be applied to the substrate. The sol originally contains solid particles and is therefore effective for forming a micro-roughness on the surface of the film. For obtaining a coating film of high transparency in this case, it is desirable that the titanium element content in the titanium element-containing liquid is from 0.1 to 10 % by weight. Such a dilute liquid used for the coating may prevent the formation of a great roughness on the surface of the titanium oxide thin film formed to thereby minimize the worsening of the transparency of the film.

When an air spray gun is used in coating with the titanium element-containing liquid, the jet mist amount out of the nozzle of the gun per unit time is preferably from 1 to 10 ml/min. Spraying with such a relatively small amount of jet mist prevents the coating film from having air bubbles taken thereinto and makes it possible to form a micro-roughness, further facilitating the formation of a coating film having a uniform thickness. More preferably, the jet mist amount is at most 7 ml/min. The air pressure to be applied to the air spray gun is preferably from 0.13 to 0.8 MPa. More preferably, the air pressure is at most 0.4 MPa, even more preferably at most 0.3 MPa, since the coating film formed can more readily realize a desirable surface profile under such a lower air pressure. The air pressure as referred to herein is an absolute pressure, and the differential pressure from the atmospheric pressure is the value to be calculated by subtracting about 0.1 MPa from that pressure value. Also preferably, the distance between the nozzle tip and the surface of the glass substrate being coated is kept from 10 to 50 cm. When the distance is smaller than 10 cm, then a uniform coating film may be difficult to form. More preferably, the distance is at least 15 cm. On the other hand, when the distance is larger than 50 cm, then the loss of the titanium element-containing liquid may be large and it is uneconomical. More preferably, the distance is at most 40 cm.

Preferably, plural air spray guns are used at the same time in coating with the liquid, and the coating is so controlled that the mist from each air spray gun does not overlap with each other. In the coating method of the invention, it is desirable that a small amount of jet mist is sprayed on the substrate. In this, therefore, using a single nozzle alone may lower the producibility. More preferably, the number of the air spray guns to be used is at least 3, even more preferably at least 4. If the mist from each spray gun overlaps with each other, then the mist particles may be large in the mist-overlapping area and a uniform coating film may be difficult to form. Concretely, it is desirable that the mists from different guns are separated from each other preferably by at least 1 cm, more preferably by at least 5 cm. In addition, using such plural air spray guns facilitates the mode of repeated coating after once drying the previous coating film.

When an air spray gun is used, it is desirable that the glass substrate is previously heated before coated with the liquid. With that, the coating liquid may be rapidly dried not requiring any specific drying means, and therefore the producibility is increased. In the coating method of the invention, a small amount of liquid is applied to the substrate in many cases, and therefore such preheating may facilitate rapid drying of the coating film. Even in a case where the coated substrate is once dried and then repeatedly coated, the preheating mode may readily shorten the coating time. The heating temperature is generally from 25 to 150°C in terms of the surface temperature of the glass substrate. However, when the temperature in the working environment is high, for example, as in summer season, then the heating may be omitted. If the heating temperature is lower than 25°C, then not only the drying time may be prolonged but also the coating film may be uneven owing to the influence thereon of water adsorbed by the surface of the glass substrate. Preferably, the heating temperature is 30°C or higher, more preferably 35°C or higher. On the other hand, if the heating temperature is higher than 150°C, then the solvent may evaporate away before the mist reaches the substrate surface. Preferably, therefore, the heating temperature is not higher than 100°C, more preferably not higher than 80°C, even more preferably not higher than 60°C.

A concrete constitution of a coating device for use herein is described below with reference to the drawings attached hereto, which comprises plural air spray guns and in which the glass substrate to be coated is moved and the air spray guns are scanned in the direction crossing the substrate-moving direction. Fig. 1 is a plain view showing one example of a coating device usable in the invention; Fig. 2 is a side view thereof; and Fig. 3 is a front view thereof.

A glass substrate 1 is heated in a heating furnace 2 with a far IR heater built therein, and then conveyed on a conveyor roller 3 to pass under a coating unit 4. Preferably, the moving speed of the substrate 1 that passes under the coating unit 4 is kept constant for making the coating film have a uniform thickness. In general, the moving speed of the glass substrate 1 is from 0.1 to 1 m/min or so. Supported by a supporting frame 5, four air spray guns 6 are hung from the coating unit 4 at a predetermined pitch in parallel to the moving direction of the glass substrate 1. In the illustrated example, the pitch (L1) of the air spray guns 6 is 30 cm. The distance between the tip of the nozzle 7 of the air spray gun 6 and the surface of the glass substrate 1 is 25 cm in the illustrated example. The area in which the mist released from the tip of the nozzle 7 reaches the surface of the glass substrate 1 forms an oval that is long in the moving direction of the glass substrate 1. Its major diameter (L2) is 20 cm in the illustrated example. Specifically, the mists from the air spray guns 6 that are spaced from each other by a distance of 10 cm reach the surface of the glass substrate 1.

While the glass substrate 1 is conveyed at a predetermined speed, the air spray guns 6 are reciprocated in the direction crossing the moving direction of the glass substrate 1. In this stage, it is desirable that the air spray guns are reciprocated at a constant speed from one edge to the other edge of the glass substrate 1. The moving speed of the air spray guns is determined depending on the moving speed of the glass substrate 1. When the moving speed of the glass substrate 1 is high, then it is desirable that the moving speed of the air spray guns 6 is also high. Preferably, the glass substrate 1 moves for a shorter distance than the arranged pitch of the air spray guns 6 within the period of time to be taken by one-way moving of the air spray gun 6, so that it can be uniformly coated. In general, the moving speed of the air spray guns 6 is from 0.5 to 5 m/min or so. Using the coating device of the type makes it possible to efficiently and uniformly coat the substrate.

When an ultrasonic spray is used for coating the substrate with a titanium element-containing liquid, then it is desirable that the liquid temperature in the liquid tank of the ultrasonic spray is set higher by from 5 to 90°C than the surface temperature of the glass substrate. The liquid drops from the ultrasonic spray are smaller than those from the air spray gun, and though they are not jetted toward the glass substrate with a strong jet stream, they can be homogeneously applied onto the substrate when the temperature of the liquid drops is kept higher than that of the surface of the glass substrate. When an extremely thin and uniform coating film is formed according to the method of this embodiment, the titanium oxide thin film formed may have a micro-roughness on the surface thereof, and this method is therefore useful.

The coating film is then heated, optionally after dried. The drying method is not specifically defined. For example, herein employable is a method of heating the coating film at a relatively low temperature, or a method of applying a dry air jet to the coating film. For example, when the coating is attained by the use of air spray guns as mentioned hereinabove, then also employable is a method comprising cutting the supply of the liquid to the nozzle of the spray gun and applying only the air jet to the coating film so as to dry it. When an ultrasonic spray is used, the coating film formed is thin and therefore it may be dried only by contacting it with dry air.

It is desirable that the glass substrate coated with a titanium element-containing liquid in that manner is heated to thereby form a baked titanium oxide thin film. The process gives a tough titanium oxide thin film. The heating method in this case is not specifically defined. Preferably, the coating film is heated at a temperature at which titanium oxide crystals can form and grow.

For the heat treatment, the surface coated with the liquid is heated up to a maximum temperature of from 550 to 700°C. Heating the surface at the temperature falling within the range gives a tough titanium oxide thin film, and in addition, since the coated surface is heated at a temperature near to the softening point of the glass substrate, the titanium oxide thin film could readily adhere to the substrate after cooled. The softening point of typical soda lime glass, as defined by ASTM C338-57, is from 720 to 730°C. If the maximum temperature for the heating is lower than 550°C, then the titanium oxide thin film formed could not be tough and, in addition, since it is much lower than the softening point of glass, the adhesiveness of the titanium oxide thin film to the substrate is insufficient. Preferably, the maximum temperature is 600°C or higher. On the other hand, however, if the maximum temperature is higher than 700°C, then the glass substrate may start softening and its flatness may be lost while being baked and the glass sheet to be obtained may be deformed. Preferably, the maximum temperature is 650°C or lower.

The heating speed at which the titanium element-containing liquid-coated glass sheet is heated is not specifically defined. Preferably, however, the sheet is heated at a rate satisfying the following formula (2):

$$5 \leq b/t \leq 30 \qquad\qquad (2)$$

wherein b represents the time (second) taken in heating the sheet from 200°C to 500°C,
t represents the thickness of the glass substrate (mm).

Relatively rapid heating under the condition makes it possible to heat the glass substrate up to a temperature at which anatase-form titanium oxide crystals can grow, within a short period of time, and when the glass substrate used contains an alkali metal, then the alkali metal ions are prevented from being unnecessarily diffusing. In particular, when titanium oxide is amorphous or has an incomplete crystal morphology or when it contains a volatile component, then alkali metal ions may readily diffuse. In such cases, therefore, it is desirable that the glass substrate is rapidly heated up to a temperature at which anatase-form crystals can grow. Accordingly, the value of b/t is preferably at least 5, more preferably at least 10. However, if a thick glass substrate is heated too rapidly, then the temperature difference between the surface and the center of the substrate is too great and the glass substrate may be broken or damaged owing to the great stress generated during heating. Accordingly, the value of b/t is preferably at most 30, more preferably at most 20.

Also preferably, the time for which the liquid-coated surface is kept at a temperature falling within a range of from 550 to 700°C is from 20 to 500 seconds. When the coated surface is kept at the temperature for a predetermined period of time, then anatase-form crystal can sufficiently grow on the glass substrate that is kept relatively soft and, as a result, a firm thin film may be formed and may adhere to the glass substrate. If the time is shorter than 20 seconds, then the film formed could not sufficiently exhibit its photocatalytic function, or the film hardness and strength may be insufficient, or the film adhesiveness to the substrate may also be low. More preferably, the time is at least 40 seconds. On the other hand, however, if the time is longer than 500 seconds, then it is undesirable since the glass substrate may be deformed, or alkali metal ions may diffuse into the titanium oxide thin film, or crystals having rutile-form crystal structure may increase. More preferably, the time is at most 300 seconds, even more preferably at most 100 seconds.

After the glass substrate has reached the maximum temperature, it is cooled under the condition that satisfies the following formula (1):

$$0.2 \leq a/t^2 \leq 5 \qquad\qquad (1)$$

wherein a represents the time (second) taken in cooling the glass substrate from 500°C to 200°C,
t represents the thickness of the glass substrate (mm).

It is experientially known that the value to be calculated by dividing the cooling speed by the square of the thickness of the glass substrate has a correlation with the value of the surface compressive stress remaining in the cooled glass sheet. Rapid cooling under the condition makes it possible to cool the substrate with its surface compressive stress remaining therein. Since the surface compressive stress remains in the glass substrate, not only the strength of the glass substrate itself may increase but also the titanium oxide film formed on the surface of the substrate could hardly peel away. When the value of $a/t^2$ in formula (1) is smaller than 0.2, then the cooling speed is too high and the glass substrate may be broken or damaged during cooling. Preferably, it is at least 0.3, more preferably at least 0.5. On the other hand, however, if the value of $a/t^2$ in formula (1) is larger than 5, then the adhesiveness of the titanium oxide thin film formed may be insufficient. Preferably, it is at most 3, more preferably at most 2.

The device for heating the glass substrate, then keeping it at an increased temperature and thereafter cooling it in the manner as above is not specifically defined so far as it satisfies the process condition of the invention. For example, a tempering furnace used for tempering glass may be favorably used.

For example, the glass sheet coated with a titanium element-containing liquid is introduced into a heating furnace kept at a high temperature. Preferably, it is introduced into a heating furnace by rotating plural rollers. The method of heating the inside of the heating furnace is not specifically defined. An electric heater may be used for the heating or fuel such as gas or petroleum may be fired for the heating. In the heating furnace, the glass sheet is heated preferably under the condition that satisfies formula (2). During this, it is desirable that the rotating direction of the rollers is changed in the heating furnace to thereby oscillate the glass sheet in the horizontal direction therein. This may prevent any local heating unevenness and may prevent the glass sheet from being broken or damaged. Apart from the conveying method with rollers, herein also employable is belt conveying or hanger conveying.

The temperature of the surface of the glass sheet in the heating furnace may be continuously monitored with a non-contact IR thermometer. After the glass sheet has reached the maximum temperature, it is taken out of the heating furnace and then cooled under the condition that satisfies formula (1). When the glass sheet is taken out of the heating furnace, for example, the rollers may be rotated. For cooling it, preferably employed is a method of putting the glass sheet in a cooling chamber and applying an pressure air jet thereto at once so as to cool it. Preferably, the air jet is applied to the substrate through a number of nozzles disposed around both surfaces of the substrate in order that the substrate can be uniformly cooled. In this step, it is also desirable that the rotating direction of the rollers is changed to thereby oscillate the glass sheet in the horizontal direction like in the heating furnace. This may prevent any local cooling unevenness and may prevent the glass sheet from being broken or damaged.

The surface compressive stress of the thus-processed glass substrate is from 20 to 250 MPa. This value is measured according to JIS R3222. The predetermined surface compressive stress remaining in the processed glass substrate improves the adhesiveness between the titanium oxide thin film formed and the glass substrate. If the surface compressive stress remaining in the glass substrate is too small, then the adhesiveness to the substrate of the titanium oxide thin film formed may be insufficient. Preferably, it is at least 50 MPa. On the other hand, however, if the remaining stress is too large, then the glass substrate may be broken or damaged while cooled. Preferably, it is at most 200 MPa. As a result of specifically defining the heat treatment condition for forming a titanium oxide thin film having a high-level photocatalytic function and having good toughness and adhesiveness, a glass sheet having a strength of the same level as that of double-strength glass, tempered glass or ultra-tempered glass can be produced simultaneously with the formation of the intended titanium oxide thin film. Accordingly, the specific heat treatment condition as above is extremely good in point of the producibility. The surface compressive stress may be measured on the surface not coated with a titanium oxide thin film.

Though not specifically defined, the crystal structure of the titanium oxide thin film thus formed preferably contains anatase-form crystals mainly, and more preferably the thin film is substantially formed of anatase-form crystals alone in point of the photocatalytic activity of the film. The crystal structure of titanium oxide formed can be confirmed through wide-angle X-ray diffractiometry.

The thickness of the film to be formed is not also specifically defined. For example, the film may have a mean thickness of from 0.02 to 1 $\mu$m or so. From the viewpoint of the catalytic activity thereof, the film preferably has a thickness not smaller than a predetermined level. If too thin, the film may readily receive the influence of alkali metal ion diffusion from the substrate. More preferably, the film thickness is at least 0.05 $\mu$m, even more preferably at least 0.1 $\mu$m. On the other hand, even though the film thickness is larger than a predetermined level, the film could not be expected to have any further improved photocatalytic effect but rather the material costs will increase. More preferably, the thickness is at most 0.7 $\mu$m, even more preferably at most 0.5 $\mu$m.

The refractive index of anatase-form titanium oxide crystal is about 2.5 and is relatively larger than the refractive index (about 1.5) of ordinary glass, and there is a great possibility of occurrence of interference color derived from the reflection on interface. For example, a film having a thickness of from 0.1 to 1 $\mu$m or so may readily have interference color, and even its slight thickness unevenness may be visible as interference fringes. From this point, it is desirable that mist of titanium element-containing liquid droplets is adhered to the surface of the glass substrate so as to coat the substrate with the mist, as so mentioned hereinabove. This makes it possible to form a micro-roughness on the surface of the titanium oxide thin film formed, and the thin film has good transparency with no visible interference color.

Regarding the profile of the roughness to be formed on the surface of the titanium oxide thin film, the roughness is preferably so deep that it may prevent the occurrence of interference color. On the other hand, however, if the depth of the roughness is larger than a predetermined level, then it is undesirable since the film surface may be whitened and the haze value may increase. Accordingly, it is desirable that the roughness satisfies both the two requirements. The method for determining the roughness of the type is not specifically defined, for which, for example, a contact probe may be used. However, since the depth of roughness for preventing surface whitening must be smaller than the wavelength of light, preferred for the determination is an observation method of utilizing the principle of an interatomic microscope or a tunnel microscope.

The depth of the roughness may be such that it does not cause interference color and does not increase the haze value. Concretely, the ten-point mean roughness Rz, as defined by JIS B0601, of the film surface scanned for a length of 13 $\mu$m with an interatomic microscope is preferably from 5 to 50 nm. For preventing interference color, the value Rz is more preferably at least 10 nm. For preventing the titanium oxide thin film from whitening, the value Rz is more preferably at most 30 nm. The roughness depth within the range is sufficiently smaller than the wavelength (380 to 780 nm) of visible light in air, and the film surface hardly whitens. On the other hand, in the area of the protrusions and the recesses of the rough surface of the titanium oxide thin film, the optical length that runs back and forth therethrough shall be a value to be calculated by multiplying the twice of the roughness depth by the refractive index, 2.5. Therefore, even in the area where the surface roughness falls within the range of from 5 to 50 nm or so as above, the difference in the optical length is great and therefore the film may hardly have interference color.

Preferably, the haze value of the titanium oxide thin film-coated glass sheet obtained herein is at most 5 %, more preferably at most 2 %. The haze value as referred to herein is measured according to the method described in JIS R3212. For the applications that require high-level visibility, the haze value is more preferably at most 1 %, even more preferably at most 0.5 %. Also preferably, the film has a light transmittance of at least 70 % for the entire range of visible light (380 to 780 nm). More preferably, the light transmittance of the film for the entire wavelength range of visible light is at least 75 %, even more preferably at least 80 %.

As above, a glass sheet of high strength and high surface compressive stress can be obtained, which has a titanium oxide thin film having an excellent photocatalytic function , good toughness and adhesiveness. A titanium oxide thin film of good appearance can be formed even on a glass sheet having a broad area, and at the same time the strength of the glass sheet can be increased. Moreover, since its producibility is good, the glass sheet can be used in many applications. The photocatalytic function that the glass sheet has includes surface hydrophilication, contamination resistance, antibacterial capability, harmful gas decomposition, and deodorization. For example, the applications include windowpanes for buildings, glass for outer walls of buildings, skylights, glass sheets for railings, windshields for automobiles, windshields for trains, windshields for airplanes, windshields for ships, windowpanes for elevators, windshields for other various vehicles, soundproof walls for roads and railroads, cover glass for solar power plants, cover glass for solar power water warmers, goggles and masks for protection and sports, glass sheets for display cases for frozen or refrigerated foods, glass sheets for display cases for vegetables, cover glass for measuring instruments, various mirrors.

Laminated glasses fabricated by laminating a glass sheet on both sides of a resin interlayer are also extremely useful, in which at least one glass sheet is the glass sheet of the invention as above and this is laminated with its titanium oxide thin film-coated surface facing outside. The resin interlayer film for use herein includes polyvinyl butyral, ethylene-vinyl acetate copolymer, polyurethane. For fabricating the laminated glasses of the type, for example, mentioned are a method of thermal bonding under normal pressure and a method of thermal bonding under reduced pressure. In the manner as described herein, a glass sheet of high strength is coated with a titanium oxide thin film having a photocatalytic function and having good toughness and adhesiveness and this is laminated into a laminated glass, and the resulting laminated glass may have further improved safety. The applications that require safety of such a high level include soundproof walls for roads and railroads, outer walls of buildings, windowpanes for buildings, skylights, and glass sheets for railings.

Above all, soundproof walls for roads and railroad require formation of a transparent oxide thin film with no interference fringes in a broad area, and further require high safety. In these applications, therefore, the laminated glasses of the type are especially useful. In addition, these are often contaminated with dust and exhaust gas, and reducing the cleaning frequency is also desired in these application. Accordingly, using the laminated glasses that comprise the glass sheet of the invention is especially favorable in these applications.

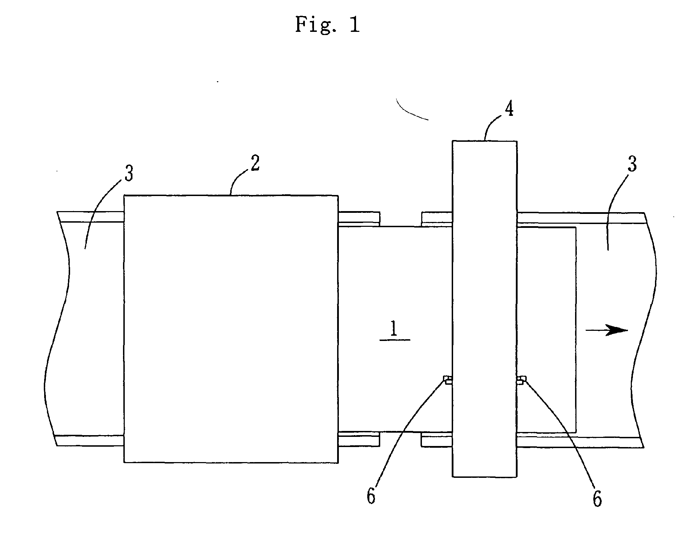

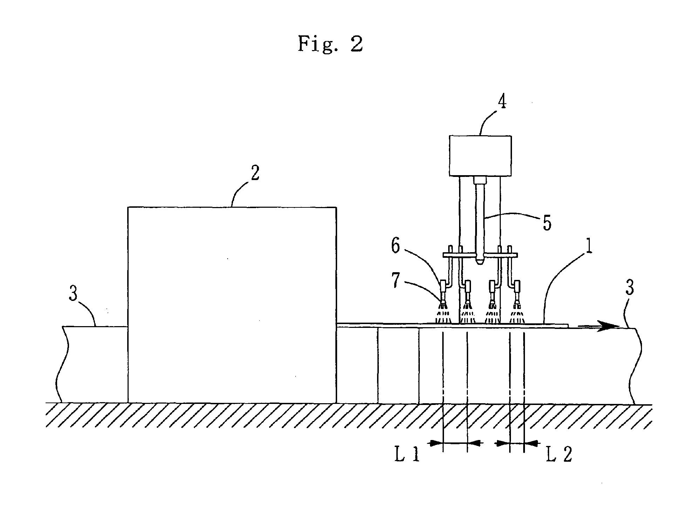

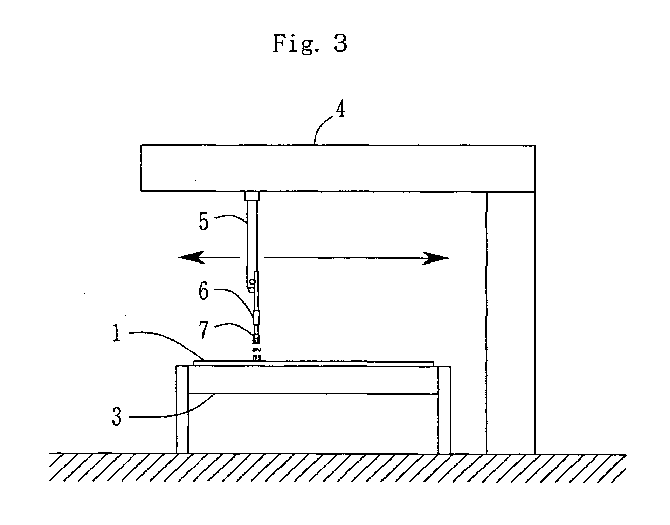

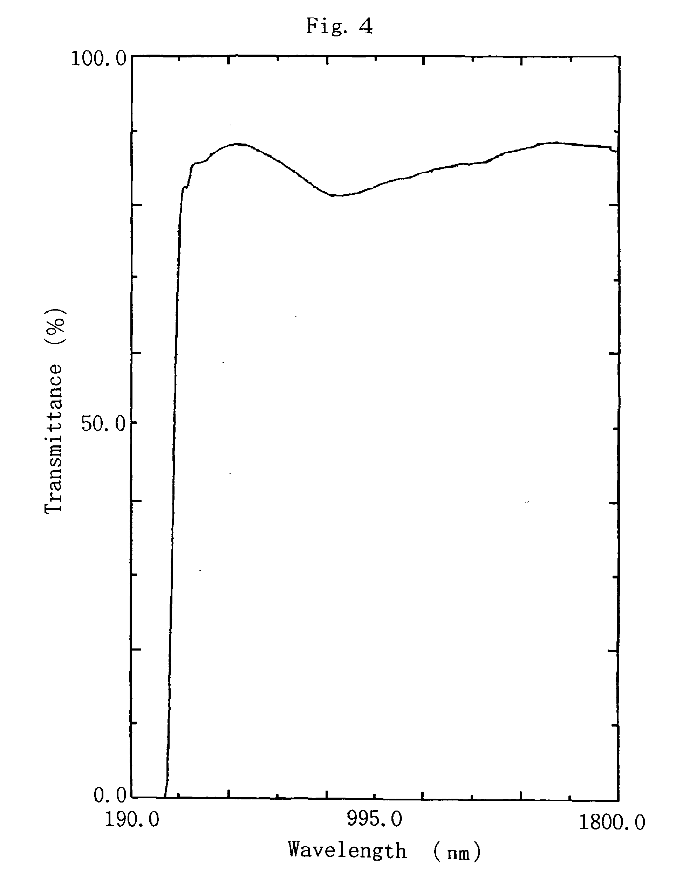

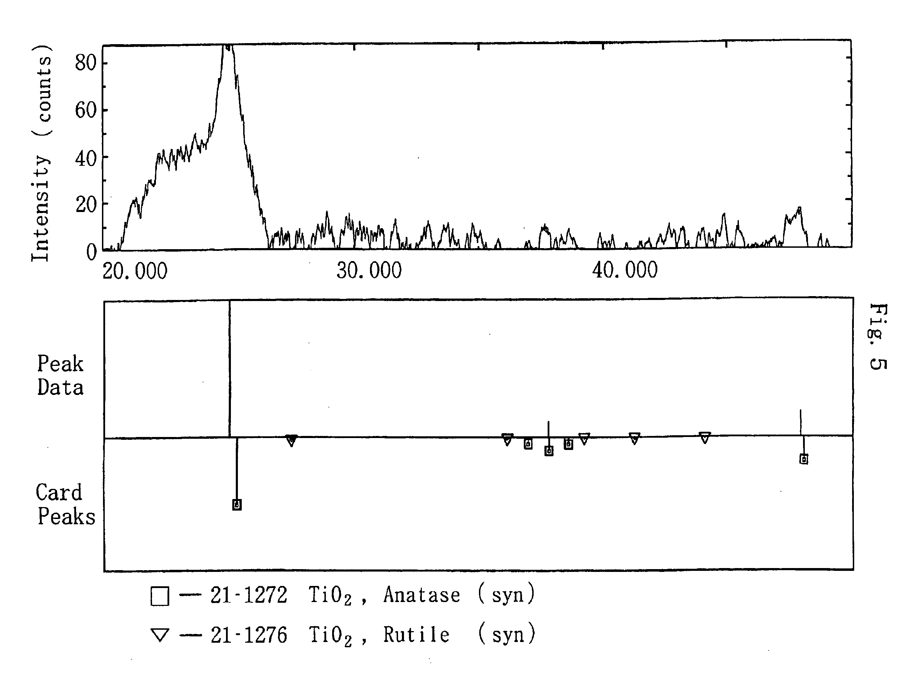

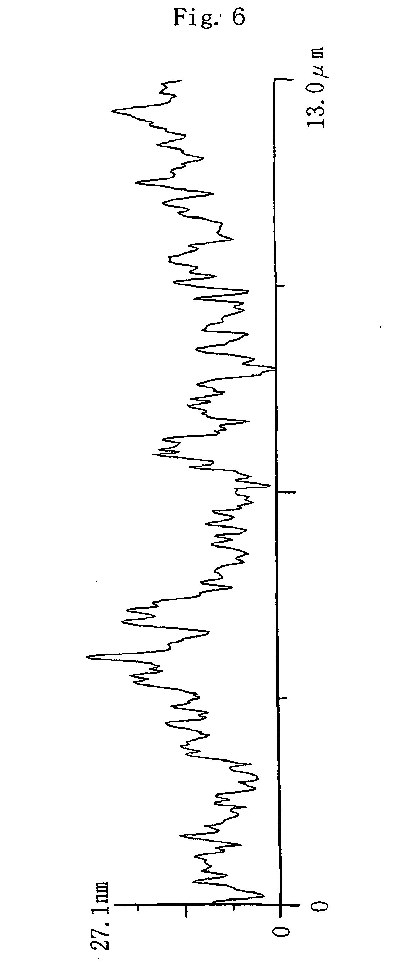

Fig. 1 is a plain view showing one example of a coating device usable in the invention. Fig. 2 is a side view of the coating device of Fig. 1. Fig. 3 is a front view of the coating device of Fig. 1. Fig. 4 is a spectral transmittance chart of the glass sheet obtained in Example 1. Fig. 5 is a wide-angle X-ray diffractiometric chart of the titanium oxide thin film formed in Example 1. Fig. 6 is a surface roughness profile of the titanium oxide thin film formed in Example 1. In these, 1 indicates a glass substrate; 2 indicates a heating furnace; 3 indicates a conveyor roll; 4 indicates a coating unit; 5 indicates a supporting frame; 6 indicates an air spray gun; 7 indicates a nozzle; L1 indicates an air spray gun pitch; L2 indicates the longer diameter of the area of the glass substrate surface that receives the mist.

The invention is described in more detail with reference to the following Examples.

Example 1:

Soda lime glass having a length of 1000 mm, a width of 1000 mm and a thickness of 4 mm was used as the starting material. The soda lime glass contains 10 % by weight of an alkali metal, sodium, and its softening temperature measured according to ASTM C338-57 is from 720 to 730°C. The surface compressive stress of the soda lime glass substrate on the side of the tin-diffused layer was measured according to JIS R3222, and it was 6.3 MPa. Both surfaces of the soda lime glass were washed with sponge with 1 N aqueous acetic acid solution and then washed with water, and further washed with sponge with an aqueous dilution of surfactant. Next, the surfactant was washed away with a large amount of water, and then water was removed from the glass substrate through air-blowing.

Thus washed, the glass substrate was kept stood against a wall, and a titanium oxide particles-containing sol was applied to the other surface of the glass substrate opposite to its tin-diffused layer, by the use of an air spray gun, "small-sized LPH-100-124LVG" manufactured by Anest Iwata. The titanium oxide particles-containing sol used herein is "YAL-COAT" manufactured by Yamanaka Sangyo, and this contains anatase-form titanium oxide particles along with peroxytitanic acid. The titanium element content of the sol is about 0.5 % by weight, the medium is mainly water, and the liquid pH is 6.8. The air pressure applied to the spray gun is 0.2 MPa (its differential pressure from the atmospheric pressure is about 0. 1 MPa), and the jet mist amount out of the nozzle of the gun per unit time is 5 ml/min. Under the condition, the sol was applied to the glass substrate spaced from the nozzle tip by a constant distance of 15 cm, while the nozzle was moved in the horizontal direction. After the nozzle reached the left side or the right side, its position was shifted in the vertical direction, and the glass substrate was thus entirely coated. Mist of fine and uniform liquid drops uniformly adhered to the glass substrate. In this stage, special attention was paid so that the glass substrate could not be entirely uniformly wetted and the applied liquid could not flow.

After the glass substrate was thus sprayed, the supply of the sol to the spray gun was stopped and air alone was applied to the glass substrate under an air pressure of 0.2 MPa (its differential pressure from the atmospheric pressure is about 0.1 MPa). Like in the mist-coating step, an air jet was applied to the glass substrate at a distance of 15 cm spaced from it while the gun was moved, whereby dry air was applied to the coated surface of the substrate and the coating film was thus dried. Next, the sol was again supplied to the spray gun, and applied to the glass substrate in the same manner as in the first coating step. This is second coating. Then, this was dried in the same manner as in the first coating. The coating and drying operation was repeated further once more, or that is, the coating and drying operation was carried out three times for multi-coating. In the repeated coating operation, the glass substrate was slightly cloudy just after coated, but after dried, it became almost transparent. Before and after drying, no coloration resulting from interference color was found in the coated glass sheet.

The glass sheet thus coated with a film was heated in a tempering furnace "HTF2448" manufactured by Tamglass Engineering. Concretely, the sheet was put on conveyor rollers with its coated surface facing upside at room temperature, the rollers were rotated and the sheet was thus introduced into the heating furnace. The furnace temperature in the heating furnace was kept at 705 to 735°C by an electric heater. The coated surface temperature of the glass substrate conveyed into the furnace was serially monitored with a non-contact IR thermometer set inside the heating furnace. As a result, the temperature increase from 200°C to 500°C of the surface took 64 seconds. The value (b/t) calculated by dividing the time (b, second) by the sheet thickness (t, mm) was 16. Inside the heating furnace, the rotating direction of the rollers was reversed for oscillation and this was repeated so as to prevent the occurrence of heating unevenness.

Next, when the surface reached the maximum temperature of 625°C, this was conveyed from the heating furnace to a cooling chamber by the motion of the rollers, and then cooled in the cooling chamber. For cooling it, a large amount of compressed air was jetted to the glass sheet through a large number of nozzles disposed on both sides of the sheet. In this stage, in the cooling chamber, the motion of the rollers was repeatedly reversed for oscillation so as to remove cooling unevenness, like in the heating stage.

After reached 550°C in the heating furnace,the surface went through the maximum temperature of 625°C, and then this was cooled in the cooling chamber to 550°C. The time for the process was 50 seconds. Cooling the surface from 500°C to 200°C took 14 seconds. The value ($a/t^2$) calculated by dividing the time (a, second) by the square of the sheet thickness (t, mm) was 0.88. After cooled in the cooling chamber to nearly room temperature, a titanium oxide thin film-coated glass sheet was thus produced.

The mean thickness of the titanium oxide thin film formed was about 0.3 $\mu$m, as calculated from the coating amount. The outward appearance of the film was colorless and transparent, and when carefully observed in the oblique direction near to the direction parallel to the substrate, the film was slightly cloudy. At a glance, the film was transparent and had a good appearance. No interference color was found at all. The spectral transmittance chart of the glass sheet obtained herein is shown in Fig. 4. As in this, the glass sheet had a good light transmittance of at least 80 % in the entire region of visible light (380 nm to 780 nm). The haze value of the glass sheet was measured according to JIS R3212, and it was almost 0 % (less than 0.1 %).

Fig. 5 shows the result of wide-angle X-ray diffractiometry of the titanium oxide thin film obtained herein. In the drawing, the square symbols are to indicate diffraction peaks derived from an anatase-form crystal structure; and the reversed triangle symbols are to indicate diffraction peaks derived from a rutile-form crystal structure. Peaks derived from anatase-form titanium oxide crystals were observed, but peaks derived from rutile-form titanium oxide crystals were not observed.

The surface of the titanium oxide thin film obtained was observed with a scanning probe microscope, "JSPM-4200" manufactured by JEOL. The interatomic force between the sharp edge of the probe and the sample surface was measured so as to analyze the surface profile of the sample. A distance of 13 $\mu$m was scanned at an AFM contact mode, and Fig. 6 shows the graphic result of the-thus analyzed surface roughness profile. The ten-point mean roughness Rz, as defined by JIS B0601, of the sample surface is 18.4 nm, and this confirms the formation of a micro-roughness much smaller than the wavelength of visible light, on the sample surface.

A nanomechanical system, "Triboscope" manufactured by Hysitron was fitted to the probe microscope, and the surface hardness of the sample was determined with it. The hardness of the film obtained herein was 6.22 GPa. The hardness of the starting material, soda lime glass was also measured in the same manner, and it was 7.09 GPa. This confirms that the hardness of the film formed on the glass substrate is almost comparable to that of glass, and is high. In addition, the film was tested for pencil hardness. Even though the surface of the sample film was rubbed with a pencil having a hardness of 6H, it did not completely peel away to make the substrate surface exposed out.

The titanium oxide film surface was irradiated with sunlight for 3 days, and its antifogging effect was confirmed by breathing on it. Interference fringes that would have been caused by the water membrane formed by the breath were seen, but they immediately disappeared. This confirms the excellent antifogging effect of the film. After exposed outdoors for 6 months, the film did not lose its antifogging effect. The contact angle of the surface of the titanium oxide thin film to a water drop was measured, and it was at most 5 degrees.

The effect of the film for decomposition of organic substances was confirmed as follows: 10 g of grease, "Epinox Grease AP2" manufactured by Nisseki-Mitsubishi was applied to the sample in an area of 100 $cm^2$ thereof, and the sample was left exposed outdoors in a place capable of receiving sunlight, for 3 months. As compared with a control prepared by applying the grease to an ordinary glass substrate, the ability of the film-coated sample to decompose organic substances is far better, and almost all organic substances were lost.

The surface compressive stress of the glass sheet obtained herein was measured on the side thereof not coated with the titanium oxide thin film, according to JIS R3222, and it was 104 MPa. This is on the same level as that of the surface compressive stress of ordinary tempered glass having a thickness of 4 mm.

Example 2 (outside the present invention):

The same titanium oxide particles-containing sol as in Example 1 was applied to a soda lime glass substrate that had been washed and dried in the same manner as in Example 1. The washed glass substrate was stood against a wall, and its side opposite to the tin-diffused layer side of the glass substrate was previously heated with an IR heater so that the surface temperature could be about 35°C. Using an air spray gun, the titanium oxide particles-containing sol was applied to the heated surface of the glass substrate under the same condition as in Example 1. Concretely, the air pressure applied to the spray gun is 0.2 MPa (its differential pressure from the atmospheric pressure is about 0.1 MPa), and the jet mist amount out of the nozzle of the gun per unit time is 5 ml/min. Under the condition, the sol was applied to the glass substrate spaced from the nozzle tip by a constant distance of 15 cm, while the nozzle was moved in the horizontal direction. After the nozzle reached the left side or the right side, its position was shifted in the vertical direction, and the glass substrate was thus entirely coated. Mist of fine and uniform liquid drops uniformly adhered to the glass substrate. In this stage, since the temperature of the glass substrate was high, the liquid drops having uniformly adhered to the glass substrate were rapidly dried. This is understood from the phenomenon that the light fogging seen just after the coating rapidly disappeared and the glass sheet became almost transparent. The first coating operation to finish the coating of the entire surface of the glass sheet took about 10 minutes, and then the second coating operation was immediately started in the same manner. After the second coating operation, the third coating operation was immediately started, and the glass substrate was coated three times in total. The coating film thus formed did not have coloration that would be derived from interference color.

The glass sheet thus coated with the coating film was heated in the same manner as in Example 1, thereby forming a titanium oxide thin film thereon. The outward appearance of the film was colorless and transparent, and the degree of cloudiness that could be confirmed through careful observation in the oblique direction near to the direction parallel to the substrate was on the same level as that in Example 1. Like in Example 1, the transparency of the film was good. In addition, no interference color was found at all in the film.

Example 3 (outside the present invention):

The same titanium oxide particles-containing sol as in Example 1 was applied to a soda lime glass substrate that had been washed and dried in the same manner as in Example 1. For the coating, used was a commercially-available ultrasonic spray for humidification. The sol in the tank of the spray was heated at 90°C, and then sprayed onto the glass substrate having a surface temperature of 23°C. Spaced by 20 cm from the glass substrate, the sol was sprayed to make the resulting mist of liquid drops uniformly adhere to the glass substrate. After having been applied to the glass substrate, the sol mist was dried with a drier. Also in the coating operation, the glass substrate was lightly fogged immediately after coated but soon became transparent after dried, like in Example 1. Before and after the drying, there was found no coloration that would be derived from the interference color of the coating film.

The glass sheet thus coated with the coating film was heated in the same manner as in Example 1, thereby forming a titanium oxide thin film thereon. The outward appearance of the film was colorless and transparent, and the degree of cloudiness that could be confirmed through careful observation in the oblique direction near to the direction parallel to the substrate was further lower than the level in Example 1. The transparency of the film formed herein was better than that of the film formed in Example 1. In addition, no interference color was found at all in the film.

Example 4 (comparative)

A glass substrate was coated with a coating film according to the same process as in Example 1 before the heat treatment. The thus-coated glass substrate was led into a heating furnace heated in the same manner as in Example 1, in which this was processed in the same manner as in Example 1 until it reached the maximum temperature of 625°C. After reached the maximum temperature, this was conveyed from the heating furnace to a cooling chamber by rollers and gradually cooled therein with no cooling air applied thereto. In this stage, the rollers were continuously reversed for oscillation for the purpose of preventing cooling unevenness.

After reached 550°C in the heating furnace, the surface went through the maximum temperature of 625°C, and then this was cooled in the cooling chamber to 550°C. The time for the process was 110 seconds. Cooling the glass sheet from 500°C to 200°C took 300 seconds. The value ($a/t^2$) calculated by dividing the time ($a$, second) by the square of the sheet thickness ($t$, mm) was 18.8. After left cooled nearly to room temperature in the cooling chamber, a glass sheet coated with a titanium oxide thin film was produced.

The mean thickness of the titanium oxide thin film formed was calculated from the coating amount, and it was about 0.3 $\mu$m. The outward appearance of the film was colorless and transparent, and when carefully observed in the oblique direction near to the direction parallel to the substrate, the film was slightly cloudy. At a glance, the film was transparent and had a good appearance. No interference color was found at all. Regarding the outward appearance, the thin film obtained herein had no significant difference from that obtained in Example 1.

The titanium oxide thin film obtained herein was tested for a pencil hardness thereof. When rubbed with a pencil having a hardness of 2H, the coating film completely peeled away and the substrate surface was exposed out. This means that the hardness or the adhesiveness of the film herein is inferior to that of the film in Example 1. The contact angle of the titanium oxide thin film surface to a water drop was measured, and it was at most 5 degrees. In this point, there was no difference between the film herein and that in Example 1.

The surface compressive stress of the glass sheet obtained herein was measured on the side not coated with the titanium oxide thin film, according to JIS R3222, and it was 0.7 MPa. This means that the surface compressive stress is nearly zero. In other words, when the surface compressive stress was reduced by slow cooling like in this case, then a tough titanium oxide thin film is difficult to be formed and the adhesiveness of the film to the substrate is insufficient. From this, it is obvious that forming a titanium oxide thin film by cooling at a predetermined speed and under the condition under which the surface compressive stress of glass could remain is effective.

Example 5 (outside the present invention):

A soda lime glass substrate that had been washed and dried in the same manner as in Example 1 was kept stood against a wall, and the same titanium oxide particles-containing sol as in Example 1 was cast onto it to thereby coat the substrate with the sol according to a flow-coating method. The thus-processed substrate was heated in the same manner as in Example 1, thereby forming a titanium oxide thin film on the surface of the glass substrate.

The titanium oxide thin film obtained herein was tested for the pencil hardness thereof. Even through rubbed with a pencil having a hardness of 6H, it did not completely peel away to make the substrate surface exposed out. Like in Example 1, the adhesiveness of the film formed herein was good. The contact angle of the titanium oxide thin film surface to a water drop was measured, and it was at most 5 degrees. Also in this point, there was no difference between the film herein and that in Example 1.

However, interference fringes were remarkably seen in the titanium oxide thin film obtained herein, and the outward appearance of the film was not good. According to the flow-coating method, a titanium oxide thin film having a micro-roughness on its surface could not be formed and its surface would be flat and smooth, and, as a result, noticeable interference fringes would be seen on its surface. From this point, it is obvious that adhering mist of titanium element-containing liquid droplets to the surface of a glass substrate so as to coat the surface of the glass substrate with the liquid, thereby forming thereon a titanium oxide thin film having a micro-roughness on the surface thereof is effective.

According to the invention, a tough titanium oxide thin film of good abrasion resistance can be formed on a glass substrate. In addition, a metal oxide thin film of good transparency with neither interference color nor interference fringes can be formed on a transparent substrate. In particular, when a metal oxide thin film having a high refractive index such as titanium oxide is formed extensively in a broad area according to the invention, it may have a good appearance and is therefore useful. The thin film has a function as a photocatalyst, and can provide photocatalyst function-having glass of good durability. Moreover, since the glass sheet of the invention has a high strength, it is most suitable for applications that require fogging resistance, contamination resistance, decomposition of organic substances, and strength.

**Claims**

1. A method for producing a glass sheet coated with a titanium oxide thin film, which comprises applying by spraying a titanium element-containing liquid having a content of metal elements and semi-metal elements except titanium element to that of titanium element of at most 1/10 by weight to the surface of a glass substrate having a surface compressive stress of at most 10 MPa, then heating the liquid-coated surface up to a maximum temperature of from 550 to 700°C, and cooling it under the condition satisfying the following formula (1) to thereby make the glass substrate have a surface compressive stress of from 20 to 250 MPa:

$$0.2 \leq a/t^2 \leq 5 \qquad (1)$$

wherein a represents the time (second) taken in cooling the surface from 500°C to 200°C,
t represents the thickness of the glass substrate (mm).

2. The method for producing a glass sheet as claimed in claim 1, wherein the time for which the temperature of the surface coated with the liquid falls within a temperature range of from 550 to 700°C is from 20 to 500 seconds.

3. The method for producing a glass sheet as claimed in claim 1 or 2, wherein the surface is heated under the condition satisfying the following formula (2):

$$5 \leq b/t \leq 30 \qquad (2)$$

wherein b represents the time (second) taken in heating the surface from 200°C to 500°C,
t represents the thickness of the glass substrate (mm).

4. The method for producing a glass sheet as claimed in any of claims 1 to 3, wherein the glass substrate contains from 5 to 15 % by weight of an alkali metal.

5. The method for producing a glass sheet as claimed in any of claims 1 to 4, wherein the area of the glass substrate is at least 0.5 $m^2$.

6. The method for producing a glass sheet as claimed in any of claims 1 to 5, wherein after the surface of the glass substrate is washed with an acidic aqueous solution and a surfactant-containing aqueous solution, it is coated with the liquid.

7. The method for producing a glass sheet as claimed in any of claims 1 to 6, wherein the titanium element content of the liquid is from 0.1 to 10 % by weight.

8. The method for producing a glass sheet as claimed in any of claims 1 to 7, wherein the liquid is a sol that contains titanium oxide particles.

9. The method for producing a glass sheet as claimed in any of claims 1 to 8, wherein the mean thickness of the titanium oxide thin film to be formed is from 0.02 to 1 $\mu$m.

10. The method for producing a glass sheet as claimed in any of claims 1 to 9, wherein the titanium oxide thin film to be formed comprises anatase-type titanium oxide.

11. The method for producing a glass sheet as claimed in any of claims 1 to 10, wherein the ten-point mean roughness Rz, as defined by JIS B 0601, of the surface of the titanium oxide thin film to be formed is from 5 to 50 nm.

12. The method for producing a glass sheet as claimed in any of claims 1 to 11, wherein the glass sheet has a haze value of at most 5 %.

**Patentansprüche**

1. Verfahren zum Herstellen einer mit einer Titanoxid-Dünnschicht beschichteten Glasscheibe, welches das Aufbringen einer Titanelement-enthaltenden Flüssigkeit durch Sprühen, welche einen Gehalt von Metallelementen und Halbmetallelementen außer Titanelement zu dem von Titanelement von höchstens 1/10, bezogen auf das Gewicht, aufweist, auf die Oberfläche eines Glassubstrats mit einer Oberflächendruckspannung von höchstens 10 MPa,
dann das Erwärmen der flüssigkeitsbeschichteten Oberfläche bis zu einer maximalen Temperatur von 550 bis 700°C, und
das Kühlen dieser unter der Bedingung, welche der folgenden Formel (1) genügt, um **dadurch** zu bewirken, daß das Glassubstrat eine Oberflächendruckspannung von 20 bis 250 MPa aufweist,
umfaßt:

$$0{,}2 \leq a/t^2 \leq 5 \qquad (1)$$

wobei a die Zeit (Sekunden) darstellt, welche zum Kühlen der Oberfläche von 500°C auf 200°C benötigt wird,
t die Dicke des Glassubstrats (mm) darstellt.

2. Verfahren zum Herstellen einer Glasscheibe nach Anspruch 1, wobei die Zeit, für welche die Temperatur der Oberfläche, welche mit der Flüssigkeit beschichtet ist, in einen Temperaturbereich von 550 bis 700°C fällt, 20 bis 500 Sekunden beträgt.

3. Verfahren zum Herstellen einer Glasscheibe nach Anspruch 1 oder 2, wobei die Oberfläche unter der Bedingung erwärmt wird, welche der folgenden Formel (2) genügt:

$$5 \leq b/t \leq 30 \qquad (2)$$

wobei b die Zeit (Sekunden) darstellt, welche zum Erwärmen der Oberfläche von 200°C auf 500°C benötigt wird, t die Dicke des Glassubstrats (mm) darstellt.

4. Verfahren zum Herstellen einer Glasscheibe nach einem der Ansprüche 1 bis 3, wobei das Glassubstrat von 5 bis 15 Gew.-% eines Alkalimetalls enthält.

5. Verfahren zum Herstellen einer Glasscheibe nach einem der Ansprüche 1 bis 4, wobei die Fläche des Glassubstrats mindestens 0,5 m$^2$ beträgt.

6. Verfahren zum Herstellen einer Glasscheibe nach einem der Ansprüche 1 bis 5, wobei, nachdem die Oberfläche des Glassubstrats mit einer sauren wässrigen Lösung und einer wässrigen Lösung, welche ein grenzflächenaktives Mittel enthält, gewaschen wurde, sie mit der Flüssigkeit beschichtet wird.

7. Verfahren zum Herstellen einer Glasscheibe nach einem der Ansprüche 1 bis 6, wobei der Titanelementgehalt der Flüssigkeit von 0,1 bis 10 Gew.-% beträgt.

8. Verfahren zum Herstellen einer Glasscheibe nach einem der Ansprüche 1 bis 7, wobei die Flüssigkeit ein Sol ist, welches Titanoxidteilchen enthält.

9. Verfahren zum Herstellen einer Glasscheibe nach einem der Ansprüche 1 bis 8, wobei die mittlere Dicke der zu bildenden Titanoxid-Dünnschicht von 0,02 bis 1 $\mu$m beträgt.

10. Verfahren zum Herstellen einer Glasscheibe nach einem der Ansprüche 1 bis 9, wobei die zu bildende Titanoxid-Dünnschicht Titanoxid vom Anatastyp umfaßt.

11. Verfahren zum Herstellen einer Glasscheibe nach einem der Ansprüche 1 bis 10, wobei die mittlere Zehnpunkt-Rauhigkeit Rz, wie durch JIS B 0601 definiert, der Oberfläche der zu bildenden Titanoxid-Dünnschicht 5 bis 50 nm beträgt.

12. Verfahren zum Herstellen einer Glasscheibe nach einem der Ansprüche 1 bis 11, wobei die Glasscheibe einen Trübungswert von höchstens 5% aufweist.

**Revendications**

1. Un procédé pour produire une feuille de verre revêtue d'une fine couche d'oxyde de titane, qui comprend l'application par pulvérisation d'un liquide contenant un constituant de titane et ayant une teneur en constituants métalliques et en constituants semi-métalliques excepté le constituant de titane à celle du constituant de titane d'au plus 1/10 en poids à la surface d'un substrat de verre ayant une contrainte de compression de surface d'au plus 10 MPa, puis en chauffant la surface revêtue du liquide à une température maximale de 550 à 700 °, et en la refroidissant selon la condition satisfaisant à la formule suivante (1) pour faire de la sorte que le substrat de verre ai une contrainte de compression de surface de 20 à 250 MPa:

$$0.2 \leq a/t^2 \leq 5 \qquad (1)$$

dans laquelle a représente le temps (seconde) pris pour refroidir la surface de 500 °C à 200 °C,

t représente l'épaisseur du substrat de verre (mm).

2. Le procédé pour produire une feuille de verre selon la revendication 1, dans lequel le temps pendant lequel la température de la surface revêtue avec le liquide se situe dans une plage de température de 550 à 700 °C est de 20 à 500 secondes.

3. Le procédé pour produire une feuille de verre selon la revendication 1 ou 2, dans lequel la surface est chauffée sous la condition satisfaisant à la formule suivante (2) :

$$5 \leq b/t \leq 30 \qquad (2)$$

où b représente le temps (seconde) pris pour chauffer la surface de 200 °C à 500 °C,
t représente l'épaisseur du substrat de verre (mm).

4. Le procédé pour produire une feuille de verre selon l'une quelconque des revendications 1 à 3, dans lequel le substrat de verre contient de 5 à 15% en poids d'un métal alcalin.

5. Le procédé pour produire une feuille de verre selon l'une quelconque des revendications 1 à 4, dans lequel la surface du substrat en verre est d'au moins 0.5m$^2$.

6. Le procédé pour produire une feuille de verre selon l'une quelconque des revendications 1 à 5, dans lequel après que la surface du substrat en verre est lavée avec une solution aqueuse acide et une solution aqueuse contenant un tensioactif, elle est recouverte du liquide.

7. Le procédé pour produire une feuille de verre selon l'une quelconque des revendications 1 à 6, dans lequel le contenu du constituant de titane du liquide est de 0,1 à 10% en poids.

8. Le procédé pour produire une feuille de verre selon l'une quelconque des revendications 1 à 7, dans lequel le liquide est un sol qui contient des particules d'oxyde de titane.

9. Le procédé pour produire une feuille de verre selon l'une quelconque des revendications 1 à 8, dans lequel l'épaisseur moyenne de la fine couche d'oxyde de titane à former est de 0,02 à 1 μm.

10. Le procédé pour produire une feuille de verre selon l'une quelconque des revendications 1 à 9, dans lequel la fine couche d'oxyde de titane à former comprend de l'oxyde de titane de type anatase.

11. Le procédé pour produire une feuille de verre selon l'une quelconque des revendications 1 à 10, dans lequel la rugosité moyenne Rz en dix points, comme définie par JIS B 0601, de la surface de la fine couche d'oxyde de titane à former est de 5 à 50 nm.

12. Le procédé pour produire une feuille de verre selon l'une quelconque des revendications 1 à 11, dans lequel la feuille de verre a une valeur de voile d'au plus 5%.

Fig. 1

Fig. 2

Fig. 3

Fig. 4

$\square$ — 21-1272  $TiO_2$ , Anatase ( syn)

$\nabla$ — 21-1276  $TiO_2$ , Rutile  ( syn)

Fig. 5

Fig. 6

**EP 1 604 960 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2756474 B
- WO 9629375 A
- JP 7100378 A
- JP 2001180980 A
- EP 1081108 A1